# EUROPEAN PATENT APPLICATION

(11) **EP 4 503 532 A1**
(43) Date of publication of application: **05.02.2025**
(21) Application number: 23799216.9
(22) Date of filing: 27.04.2023
(51) Int. Cl.: H04L 27/26

(54) **METHOD AND APPARATUS FOR TRANSMITTING DATA SEQUENCE, AND STORAGE MEDIUM AND ELECTRONIC APPARATUS**

(30) Priority: 05.05.2022 CN 202210482266
(71) Applicant: ZTE Corporation, Shenzhen, Guangdong 518057 (CN)
(72) Inventor: XIN, Yu, Shenzhen, Guangdong 518057 (CN); YU, Guanghui, Shenzhen, Guangdong 518057 (CN); HUA, Jian, Shenzhen, Guangdong 518057 (CN); BAO, Tong, Shenzhen, Guangdong 518057 (CN); XU, Jin, Shenzhen, Guangdong 518057 (CN); HU, Liujun, Shenzhen, Guangdong 518057 (CN)
(74) Representative: Pennacchio, Salvatore Giovanni
(86) International application number: PCT/CN2023/091318
(87) International publication number: WO 2023/213230

(57) **Abstract**

The embodiments of the present disclosure provide a data sequence transmission method and apparatus, a storage medium, and an electronic apparatus. The method comprises: grouping a target number of frequency domain resource blocks, so as to obtain a plurality of frequency domain resource block groups, wherein the subcarrier spacings within each frequency domain resource block group are equal, and the subcarrier spacings between various frequency domain resource block groups are equal; executing the following operations for each frequency domain resource block group, to obtain a plurality of data sequences respectively corresponding to each frequency domain resource block group: respectively performing a first inverse Fourier transform on target data transmitted in the various frequency domain resource blocks included in the frequency domain resource block group, to obtain a plurality of groups of first data sequences, the data to be transmitted comprising the target data; performing a second inverse Fourier transform or upsampling on the plurality of groups of first data sequences to obtain a data sequence corresponding to the frequency domain resource block group; and transmitting the plurality of groups of data sequences.

## Description

### Cross-Reference to Related Application

The present disclosure claims the priority of Chinese Patent Application CN202210482266.9, filed on 5 May 2020 and entitled "Method and Apparatus for Transmitting Data Sequence, and Storage medium and Electronic Device", the disclosure of which is incorporated herein by reference in its entirety.

### Technical Field

The embodiments of the present disclosure relate to the field of communications, and in particular, to a data sequence transmission method and apparatus, a storage medium, and an electronic device.

### Background

In Fifth Generation New Radio, 5G NR, Cyclic Prefix-Orthogonal Frequency Division Multiplexing, CP-OFDM is commonly used as the fundamental waveform. However, due to the relatively large spectral leakage of the system, it is prone to inter-subband interference. Therefore, the performance of the CP-OFDM system is sensitive to frequency and time offsets between adjacent subbands.

In addition, similar issues may arise in 6G services. The frequency bands used in future 6G services will cover a wide range, and the deployment methods will be diverse, which may lead to out-of-band leakage of channels or subbands, causing an interference between systems or between subbands.

How to effectively reduce the interference is the problem to be solved urgently at present.

### Summary

The embodiments of the present disclosure provide a data sequence transmission method and apparatus, a storage medium, and an electronic device, so as to at least solve the problem in the related art that there is an interference between systems or between subbands.

According to one embodiment of the present disclosure, a data sequence transmission method is provided, comprising: grouping a target number of frequency domain resource blocks to obtain a plurality of frequency domain resource block groups, wherein data to be transmitted is transmitted in the target number of frequency domain resource blocks, each frequency domain resource block comprises a corresponding number of subcarriers, the subcarrier spacings within each frequency domain resource block group are equal, and the subcarrier spacings between various frequency domain resource block groups are equal; executing the following operations for each frequency domain resource block group, to obtain a plurality of data sequences respectively corresponding to each frequency domain resource block groups: respectively performing a first inverse Fourier transform on target data transmitted in the various frequency domain resource blocks included in the frequency domain resource block group, to obtain a plurality of groups of first data sequences, the data to be transmitted comprising the target data; performing a second inverse Fourier transform or upsampling on the plurality of groups of first data sequences to obtain a data sequence corresponding to the frequency domain resource block group; and transmitting the plurality of groups of data sequences.

According to another embodiment of the present disclosure, a data sequence transmission apparatus is provided, comprising: a grouping module, configured to group a target number of frequency domain resource blocks to obtain a plurality of frequency domain resource block groups, wherein data to be transmitted is transmitted in the target number of frequency domain resource blocks, each frequency domain resource block comprises a corresponding number of subcarriers, the subcarrier spacings within each frequency domain resource block group are equal, and the subcarrier spacings between various frequency domain resource block groups are equal; a processing module, configured to execute the following operations for each frequency domain resource block group, to obtain a plurality of data sequences respectively corresponding to each frequency domain resource block groups: respectively performing a first inverse Fourier transform on target data transmitted in the various frequency domain resource blocks included in the frequency domain resource block group, to obtain a plurality of groups of first data sequences, the data to be transmitted comprising the target data; performing a second inverse Fourier transform or upsampling on the plurality of groups of first data sequences to obtain a data sequence corresponding to the frequency domain resource block group; and a transmission module, configured to transmit the plurality of groups of data sequences.

According to another embodiment of the present disclosure, further provided is a computer readable storage medium storing a computer program, wherein the computer program is configured to execute, when running, the steps in any one of the described method embodiments.

According to another embodiment of the present disclosure, further provided is an electronic device, comprising a memory and a processor, wherein the memory stores a computer program, and the processor is configured to run the computer program to execute the steps in any one of the method embodiments.

### Brief Description of the Drawings

Fig. 1 is a hardware structural block diagram of a mobile terminal for a data sequence transmission method according to an embodiment of the present disclosure;
Fig. 2 is a flowchart of a data sequence transmission method according to an embodiment of the present disclosure;
Fig. 3 is a schematic diagram of data transmission according to a first embodiment of the present disclosure;
Fig. 4 is a schematic diagram of data transmission according to a second embodiment of the present disclosure;
Fig. 5 is a schematic diagram of data transmission according to a third embodiment of the present disclosure;
Fig. 6 is a structural block diagram of a data sequence transmission apparatus according to an embodiment of the present disclosure.

### Detailed Description of the Embodiments

The embodiments of the present disclosure are described in detail with reference to the accompanying drawings and in conjunction with the embodiments.

It should be noted that the terms "first", "second" etc. in the description, claims, and accompanying drawings of the present disclosure are used to distinguish similar objects, and are not necessarily used to describe a specific sequence or order.

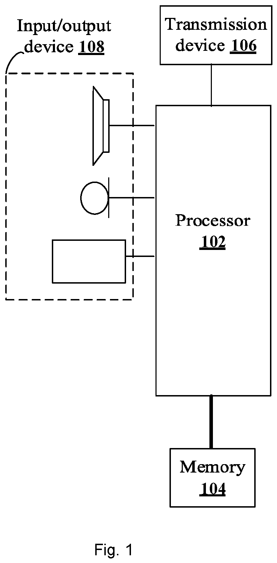

Method embodiments provided in the embodiments of the present disclosure may be executed in a mobile terminal, a computer terminal, or similar computing apparatuses. Taking running on the mobile terminal as an example, Fig. 1 is a hardware structural block diagram of a mobile terminal for a data sequence transmission method according to an embodiment of the present disclosure. As shown in Fig. 1, the mobile terminal may include one or more (only one is shown in Fig. 1) processors 102 (the processors 102 may include, but are not limited to, a microprocessor MCU or a processing device such as a programmable logic device FPGA) and a memory 104 configured to store data, wherein the mobile terminal can further include a transmission device 106 for a communication function and an input/output device 108. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 104 may be configured to store a computer program, for example, a software program and a module of application software, such as a computer program corresponding to the data sequence transmission method in the embodiment of the present invention. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the mobile terminal over a network. Examples of the described network include, but are not limited to the Internet, an intranet, a local area network, a mobile communication network, and a combination thereof.

The transmission device 106 is configured to receive or transmit data by a network. Specific examples of the described network may include a wireless network provided by a communication provider of the mobile terminal. In one example, the transmission device 106 includes a network interface controller, NIC which may be connected to other network devices by means of a base station, thereby being able to communicate with the Internet. In one example, the transmission device 106 may be a radio frequency, RF, for short module for communicating wirelessly with the Internet.

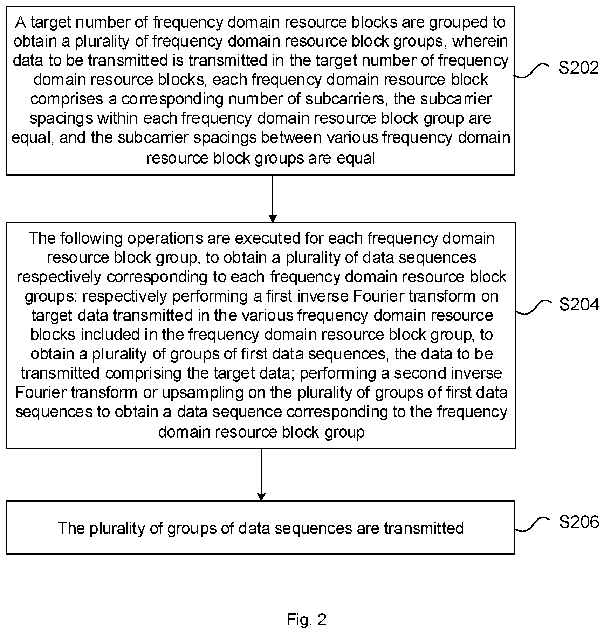

The present embodiment provides a data sequence transmission method. Fig. 2 is a flowchart of a data sequence transmission method according to an embodiment of the present disclosure. As shown in Fig. 2, the method comprises the following steps:
step S202: a target number of frequency domain resource blocks are grouped to obtain a plurality of frequency domain resource block groups, wherein data to be transmitted is transmitted in the target number of frequency domain resource blocks, each frequency domain resource block comprises a corresponding number of subcarriers, the subcarrier spacings within each frequency domain resource block group are equal, and the subcarrier spacings between various frequency domain resource block groups are equal;
step S204: the following operations are executed for each frequency domain resource block group, to obtain a plurality of data sequences respectively corresponding to each frequency domain resource block groups: respectively performing a first inverse Fourier transform on target data transmitted in the various frequency domain resource blocks included in the frequency domain resource block group, to obtain a plurality of groups of first data sequences, the data to be transmitted comprising the target data; performing a second inverse Fourier transform or upsampling on the plurality of groups of first data sequences to obtain a data sequence corresponding to the frequency domain resource block group; and
step S206: the plurality of groups of data sequences are transmitted.

The operation may be performed by a node in a network, for example, a terminal, a base station, or another network element capable of transmitting data by means of a network, which is not limited in the present disclosure.

In S202, when the target number of frequency domain resources are grouped, the grouping may be performed in an equal division manner, or the grouping may be performed in a non-equal division manner, or the grouping may be performed on the basis of an actual application scenario, and the specific grouping manner is not limited. In addition, the number of groups can also be set flexibly, e.g. the groups can be divided into two groups, four groups, etc., and the number of frequency domain resource blocks included in each group can be the same or different, or partially the same and partially different.

In S204, when the operations in S204 are performed on each frequency domain resource block group, the foregoing operations may be performed simultaneously on the plurality of frequency domain resource block groups, or the foregoing operations may be performed sequentially on the plurality of frequency domain resource block groups, or the foregoing operations are performed in batches, and the specific order of performing the foregoing operations is not limited.

In S204, the first inverse Fourier transform may be an over-sampled inverse Fourier transform, and the second inverse Fourier transform may also be an over-sampled inverse Fourier transform.

In the described embodiment, after performing a plurality of inverse Fourier transforms on the frequency resource block or performing the inverse Fourier transform and upsampling on the frequency resource block, filtering or windowing may be performed successively. In this case, the filtering of each frequency domain resource block can be achieved by a filtering or windowing operation of low complexity.

In the described embodiments, frequency domain resource blocks for transmitting data are grouped, a first inverse Fourier transform is performed on data transmitted in the plurality of frequency domain resource block groups obtained by grouping, a second inverse Fourier transform or upsampling is again performed on the plurality of groups of data sequences obtained after the first inverse Fourier transform processing, and the data sequences obtained after the foregoing processing are transmitted. After the plurality of inverse Fourier transforms, or inverse Fourier transforms and upsampling, the filtering of each frequency domain resource block can be achieved by a filtering or windowing operation of low complexity, which effectively reduces interference of data transmission between systems or between subbands, thereby solving the problem of interference between systems or between subbands in the related art, and improving data transmission efficiency.

In one exemplary embodiment, before transmitting a plurality of groups of data sequences, the method further comprises: performing a filtering operation on each group of data sequences, wherein at least one group of data sequences has a different filtering function when performing the filtering operation than other groups.

In one exemplary embodiment, the plurality of frequency domain resource block groups include at least one target frequency domain resource block group, the bandwidth of the target resource blocks included in the target frequency domain resource block group is not equal to the bandwidth of other resource blocks included in the target frequency domain resource block group other than the target resource blocks, and the target resource blocks are resource blocks adjacent to frequency domain resource blocks included in frequency domain resource block groups other than the target frequency domain resource block group.

In one exemplary embodiment, among the plurality of frequency domain resource blocks, the bandwidth of the frequency domain resource blocks within each group is equal to the bandwidth of the frequency domain resource blocks in another group that are not adjacent.

In one exemplary embodiment, among the plurality of frequency domain resource block groups, the frequency domain resource blocks which are not adjacent to any other group have the same bandwidth. In the present embodiment, the subcarrier spacings of a target number of frequency domain resource blocks may be equal, and in this case, the equal bandwidth of frequency domain resource blocks means that the frequency domain resource blocks have an equal number of subcarriers.

In one exemplary embodiment, the bandwidths of the target resource blocks are less than bandwidths of other resource blocks.

In one exemplary embodiment, subcarriers corresponding to the target number of frequency domain resource blocks are continuously distributed in a frequency domain.

In one exemplary embodiment, the frequency domain resource blocks in each group are continuously distributed in a frequency domain, and a plurality of frequency domain resource block groups are continuously distributed in the frequency domain.

In one exemplary embodiment, the IFFT points of the first inverse Fourier transform are greater than or equal to the number of subcarriers corresponding to the frequency resource blocks currently processed, and/or the IFFT points of the first inverse Fourier transform are smaller than the sum of the number of subcarriers corresponding to the target number of frequency resource blocks.

In one exemplary embodiment, there is at least one frequency domain resource block group in which the bandwidths of all frequency domain resource blocks within the group are not equal and the number of IFFT points of the first inverse Fourier transform is equal.

In one exemplary embodiment, for frequency domain resource blocks that are not adjacent to another group, the number of IFFT points of the first inverse Fourier transform is less than or equal to twice the number of subcarriers included in the frequency domain resource blocks. In the present embodiment, for the target resource blocks, the number of IFFT points of the first inverse Fourier transform is greater than twice the number of subcarriers included in the frequency domain resource blocks.

In one exemplary embodiment, a zero frequency position of the first inverse Fourier transform is within a range of frequency domain resource blocks in which the first inverse Fourier transform is currently performed.

In one exemplary embodiment, when the first inverse Fourier transform is performed on different frequency domain resource blocks, the corresponding zero frequency positions are different.

In one exemplary embodiment, for frequency domain resource block adjacent to another group, the zero frequency position during the first inverse Fourier transform operation is outside the range of present frequency domain resource block.

In one exemplary embodiment, for at least one group of frequency-domain resource block groups, the zero frequency position or zero subcarrier during the first inverse Fourier transform operation is located at one of the subcarriers within the frequency domain resource blocks.

In one exemplary embodiment, performing a respective first inverse Fourier transform on the target data transmitted in each frequency resource block included in the frequency resource block group comprises: performing a Fast Fourier Transform, FFT or a Discrete Fourier Transform, DFT, on the target data transmitted in at least one frequency resource block included in the frequency resource block group; and performing the first inverse Fourier transform on the target data on which the Fourier transform has been performed.

In one exemplary embodiment, performing a second inverse Fourier transform on the plurality of groups of first data sequences comprises: performing a second inverse Fourier transform on the plurality of groups of first data sequences in a manner of performing the second inverse Fourier transform once every N pieces of first data, wherein the first data for each execution of the second inverse Fourier transform comes from each group of first data sequences, and there are N groups of first data sequences.

In one exemplary embodiment, performing the second inverse Fourier transform once every N pieces of first data by: adding a predetermined number of 0s for every N pieces of first data (or referred to as adding a plurality of groups of zero data sequences), and performing the second inverse Fourier transform on the first data to which the predetermined number of 0s has been added.

In one exemplary embodiment, the method further comprises: performing upsampling on a first data sequence corresponding to the frequency domain resource block group when a frequency domain resource block group only includes one frequency domain resource block, wherein the upsampling comprises inserting a plurality of 0s into the first data sequence at equal intervals to obtain a data sequence corresponding to the frequency domain resource block group.

In one exemplary embodiment, transmitting a plurality of groups of data sequences comprises: performing an addition operation on the plurality of groups of data sequences to obtain a group of time domain data sequences; and transmitting the group of time domain data sequences.

In one exemplary embodiment, before performing an addition operation on the plurality of groups of data sequences, the method further comprises; performing a dot product operation on at least one group of data sequences included in the plurality of groups of data sequences, wherein the sequences multiplied in the dot product operation are sequences of equal magnitude with successive phase changes.

In one exemplary embodiment, before performing the addition operation on the plurality of groups of data sequences, the method further comprises performing a windowing operation or a filtering operation on each group of data sequences included in the plurality of groups of data sequences.

In one exemplary embodiment, the data sequences of each group have the same function when performing the windowing operation or the filtering operation.

In one exemplary embodiment, the filtering operation is a single-phase filtering operation or a multi-phase filtering operation.

In one exemplary embodiment, the filtering function used in the multi-phase filtering operation or windowing includes a root raised cosine function, a raised cosine function, a rectangular function, an Isotropic Orthogonal Transform Algorithm, IOTA, function, a 1+D function, or the like.

In one exemplary embodiment, when the plurality of groups of data sequences are transmitted, each group of data sequences may be time domain data sequences.

In one exemplary embodiment, the data to be transmitted includes constellation point modulated data and reference signal data.

According to the above embodiment, after the target number of frequency domain resource blocks are grouped, the bandwidths of the frequency domain resource blocks in different groups may be different, and windowing or filtering may be performed by using a waveform function of different parameters. In addition, since the subcarrier spacings can be equal, the bandwidths of the frequency domain resource blocks adjacent to another group may not be equal. However, the same number of IFFT points can be used for Fourier transform by means of oversampling, and adjacent groups will not interfere with each other after data processing. Therefore, the problem of data interference in the related art is effectively solved.

The present disclosure will be described below in conjunction with specific embodiments:

### Embodiment 1:

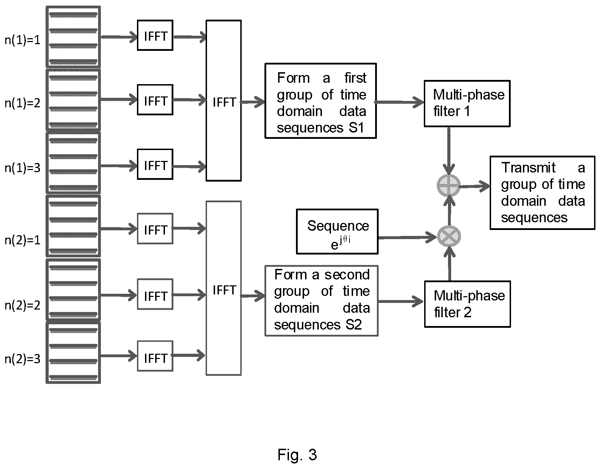

Data to be transmitted is transmitted in N frequency domain resource blocks, the N resource blocks respectively include k(n) subcarriers, and the subcarrier spacings of the N resource blocks are equal. In the present embodiment, the bandwidths of the N resource blocks are all equal, the N resource blocks include the same number of subcarriers, and k(n) = 4, as shown in Fig. 3.

In the present embodiment, for example, the N frequency domain resource blocks are divided into two groups (certainly, in an actual application, the N frequency domain resource blocks may also be divided into more groups, for example, three groups, five groups, ten groups, and so on; in the present embodiment, the N frequency domain resource blocks are divided into two groups), and the two frequency domain resource block groups are distributed continuously in the frequency domain, that is, the N frequency domain resource blocks are distributed continuously in the frequency domain, as shown in Fig. 3. The number of resource blocks contained in the two groups is N(1) and N(2) respectively, where N(1) = 3, N(2) = 3, N(1) + N(2) = N.

The data to be transmitted on N (m) frequency domain resource blocks in each group are processed respectively to form N(m) groups of data sequences. In the present embodiment, an inverse Fourier transform (IFFT or IDFT) is performed on the data to be transmitted on all N(m) frequency domain resource blocks of each group, and each group forms N(m) groups of data sequences. That is to say, In the present embodiment, the inverse Fourier transform is performed on the data to be transmitted on the N frequency resource blocks respectively, to form N groups of data sequences. The inverse Fourier transform is an over-sampled inverse Fourier transform or a non-over-sampled inverse Fourier transform, the number of IFFT (or IDFT) points of the inverse Fourier transform is greater than or equal to 4, and a zero frequency corresponding to the inverse Fourier transform operation is within the range of present frequency domain resource block.

The N(m) groups of data sequences for each group are then processed respectively, and a group of data sequences are formed for each group. In the present embodiment, an inverse Fourier transform is performed on N(1) groups of data sequences of the first group to form a group of data sequences S1; an inverse Fourier transform is performed on N(2) groups of data sequences of the second group to form a group of data sequences S2. The inverse Fourier transform is such that the inverse Fourier transform is performed once every N(m) pieces of data, and the N(m) pieces of data are from N(m) groups of data sequences. For example, N(m) groups of data sequences are respectively arranged in N(m) rows, then N(m) pieces of data are extracted by column, and a inverse Fourier transform is performed on each piece of extracted N(m) data. Performing the inverse Fourier transform once every N(m) pieces of data, further comprises adding a plurality of groups of zero data, and then performing the inverse Fourier transform, wherein the number of IFFT points of the inverse Fourier transform is greater than N(m). The inverse Fourier transform is performed once every N (m) pieces of data to form a time domain data sequence, wherein time domain data sequences generated by a plurality of inverse Fourier transforms are serially connected to form a data sequence S1 or S2, or the plurality of time domain data sequences generated by the inverse Fourier transforms are repeated and then serially connected to form a data sequence S1 or S2.

The processing of the data to be transmitted on N(1) frequency domain resource blocks of the first group is taken as an example for description. It is assumed that data to be transmitted on four subcarriers of each resource block are respectively [A1, A2, A3, A4], [B1, B2, B3, B4], and [C1, C2, C3, C4]. The three groups of data into which four 0s have been added are [0, 0, A1, A2, A3, A4, 0, 0], [0, 0, B1, B2, B3, B4, 0, 0] and [0, 0, C1, C2, C3, C4, 0, 0] respectively. 8-point oversampling inverse Fourier transform is respectively performed on the data to be transmitted of each resource block, so as to form three groups of time domain data sequences which are [a1, a2, a3, a4, a5, a6, a7, a8], [b1, b2, b3, b4, b5, b6, b7, b8] and [c1, c2, c3, c4, c5, c6, c7, c8] respectively. Then, a plurality of inverse oversampled Fourier transforms are performed on the three groups of time domain data sequences, and it is assumed that the number of the inverse Fourier transform points is 16. Assume that a first group of data formed after 16-point IFFT is performed on [a1, b1, c1] is [D1-1, D1-2, D1-3, D1-4, D1-5, D1-6, D1-7, D1-8, D1-9, D1-10, D1-11, D1-12, D1-13, D1-14, D1-15, D1-16], and a second group of data formed by performing 16-point IFFT on [a2, b2, c2] is [D2-1, D2-2, D2-3, D2-4, D2-5, D2-6, D2-7, D2-8, D2-9, D2-10, D2-11, D2-12, D2-13, D2-14, D2-15, D2-16], by analogy, the eighth group of data formed after 16-point IFFT is performed on [a8, b8, c8] is [D8-1, D8-2, D8-3, D8-4, D8-5, D8-6, D8-7, D8-8, D8-9, D8-10, D8-11, D8-12, D8-13, D8-14, D8-15, D8-16], these eight groups of data sequences are linked in series to form a group of time domain data sequence S1. By the same reasoning, similar processing is performed on the data to be transmitted on the N(2) frequency resource blocks of the second group, to form a group of time domain data sequence S2.

Then, the data sequence S1 and the data sequence S2 are processed to form a group of data sequences, wherein the processing comprises: filtering or windowing the data sequence S1, filtering or windowing the data sequence 2, a dot product operation, and a summing operation. Since the bandwidths of the frequency domain resource blocks are the same in the first group and the second group, the waveform functions used when the data sequences S1 and S2 perform a multi-phase filtering operation respectively are the same. The dot product operation may be a dot product operation performed on the data sequence S1, or a dot product operation may be performed on the data sequence S2. In the present embodiment, the data sequence S2 undergoes a multi-phase filtering operation. Following this, it is subjected to a dot product operation with the sequence ejθi (where i=0, 1, 2,... ). The result is then added to the sequence obtained after performing the multi-phase filtering operation on the data sequence S1. This process forms a group of time domain data sequences, thereby transmitting the group of time domain data sequences.

### Embodiment 2:

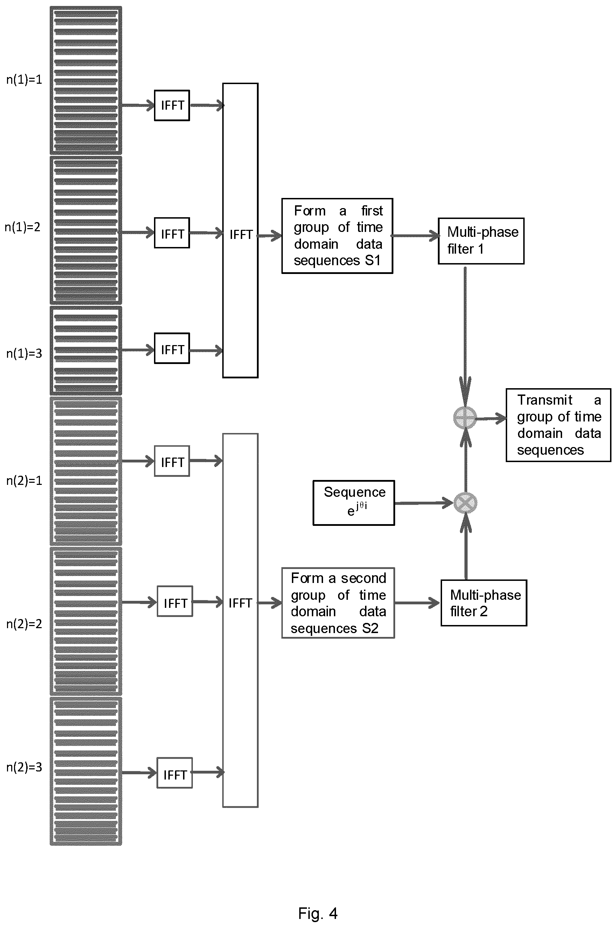

Data to be transmitted is transmitted in N frequency domain resource blocks, the N resource blocks respectively include k(n) subcarriers, and the subcarrier spacings of the N resource blocks are equal. The N frequency domain resource blocks are divided into two groups (similarly, in the present embodiment, dividing the N frequency domain resource blocks into two groups is also taken as an example for description, and in practical applications, the N frequency domain resource blocks may also be divided into more groups, for example, three groups, five groups, ten groups, and so on), and the two frequency domain resource block groups are distributed continuously in the frequency domain, that is, the N frequency domain resource blocks are distributed continuously in the frequency domain, as shown in Fig. 4. In the present embodiment, the number of resource blocks contained in the two groups is N(1) and N(2) respectively, where N(1) = 3, N(2) = 3, N(1) + N(2) = N. In at least one of the two groups above, the bandwidths of the N(m) frequency domain resource blocks are not all equal. In the present embodiment, the bandwidths of the N(2) resource blocks in the second group are all equal, the N(2) resource blocks in the second group include the same number of subcarriers, and k(n) = 16; in N(1) resource blocks of the first group, the bandwidths of resource blocks adjacent to the second group are not equal to the bandwidths of other resource blocks, the resource blocks adjacent to the second group include eight subcarriers, and other resource blocks include 16 subcarriers, and for details, reference may be made to Fig. 4.

In the present embodiment, the data to be transmitted on N (m) frequency domain resource blocks in each group are processed respectively to form N (m) groups of data sequences. In the present embodiment, an inverse fourier transform (IFFT or IDFT) is performed on the data to be transmitted on all N (m) frequency domain resource blocks of each group, and each group forms N (m) groups of data sequences. That is to say, In the present embodiment, the inverse Fourier transform is performed on the data to be transmitted on the N frequency resource blocks respectively, to form N groups of data sequences. The inverse Fourier transform is an over-sampled inverse Fourier transform or a non-over-sampled inverse Fourier transform, the number of IFFT (or IDFT) points of the inverse Fourier transform is greater than or equal to 16, and a zero frequency corresponding to the inverse Fourier transform operation is within the range of the present frequency domain resource block. In at least one group of the two groups, the bandwidths of the N (m) frequency domain resource blocks are not all equal, but the number of IFFT points is equal.

The N(m) groups of data sequences for each group are then processed respectively, and a group of data sequences are formed for each group. In the present embodiment, an inverse Fourier transform is performed on N(1) groups of data sequences of the first group to form a group of data sequences S1; an inverse Fourier transform is performed on N(2) groups of data sequences of the second group to form a group of data sequences S2. The inverse Fourier transform is such that the inverse Fourier transform is performed once every N(m) pieces of data, and the N(m) pieces of data are from N(m) groups of data sequences. For example, N(m) groups of data sequences are respectively arranged in N(m) rows, then N(m) pieces of data are extracted by column, and a inverse Fourier transform is performed on each piece of extracted N(m) data. Performing the inverse Fourier transform once every N(m) pieces of data, further comprises adding a plurality of groups of zero data, and then performing the inverse Fourier transform, wherein the number of IFFT points of the inverse Fourier transform is greater than N(m). The inverse Fourier transform is performed once every N (m) pieces of data to form a time domain data sequence, wherein time domain data sequences generated by a plurality of inverse Fourier transforms are serially connected to form a data sequence S1 or S2, or the plurality of time domain data sequences generated by the inverse Fourier transforms are repeated and then serially connected to form a data sequence S1 or S2.

Then, the data sequence S1 and the data sequence S2 are processed to form a group of data sequences, wherein the processing comprises: filtering or windowing the data sequence S1, filtering or windowing the data sequence 2, a dot product operation, and a summing operation. Although the bandwidths of the frequency domain resource blocks are not all equal, since the number of the Inverse Fast Fourier transform, IFFT points of the data to be transmitted on each of the frequency domain resource blocks is the same in the first group and the second group, the waveform functions used when the multi-phase filtering operation is performed on the data sequences S1 and S2 respectively are the same. The dot product operation may be a dot product operation performed on the data sequence S1, or a dot product operation may be performed on the data sequence S2. In the present embodiment, after the multi-phase filtering operation is performed on the data sequence S2, a dot product operation is performed on the data sequence S2 and the sequence ejθi (where i=0, 1, 2,... ), and then an addition operation is performed on the data sequence S2 and a sequence formed after performing the multi-phase filtering operation on the data sequence S1, so as to form a group of time domain data sequences. Then, the group of time domain data sequences is transmitted.

### Embodiment 3:

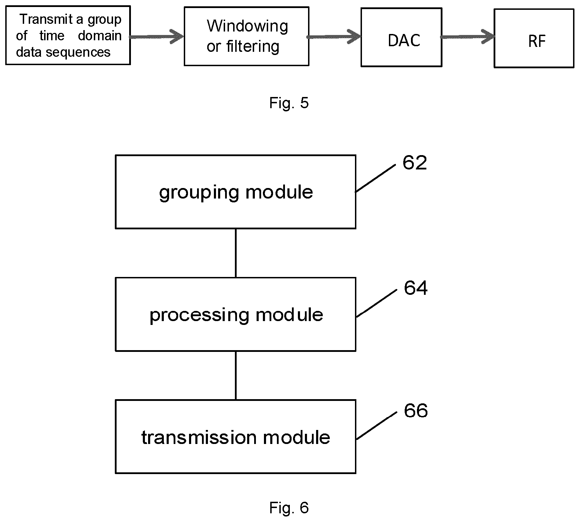

As shown in Fig. 5, transmitting the group of time domain data sequences further comprises performing windowing or filtering, digital-to-analog conversion, DAC, and a radio frequency link RF transmission process on the group of time domain data sequences. If the windowing or filtering operation is performed before the group of time domain data sequences is formed, the group of time domain data sequences may not be windowed or filtered.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present disclosure, or in other words, the part of the technical solutions making contributions to the prior art, may be embodied in the form of a software product stored in a storage medium (such as a Read-Only Memory, ROM/Random Access Memory, RAM, a magnetic disk and an optical disc), including a number of instructions for enabling a terminal device (which may be a mobile phone, a computer, a server, or a network device, etc.) to perform the methods described in various embodiments of the present disclosure.

A data sequence transmission apparatus is also provided in the present embodiment. The apparatus is used for implementing the described embodiments and preferred implementations, and what has been described will not be elaborated. As used below, the term "module" may implement a combination of software and/or hardware of predetermined functions. Although the apparatus described in the following embodiments is preferably implemented in software, implementation in hardware or a combination of software and hardware is also possible and conceived.

Fig. 6 is a structural block diagram of a data sequence transmission apparatus according to an embodiment of the present disclosure. As shown in Fig. 6, the apparatus includes:
a grouping module 62, configured to group a target number of frequency domain resource blocks to obtain a plurality of frequency domain resource block groups, wherein data to be transmitted is transmitted in the target number of frequency domain resource blocks, each frequency domain resource block comprises a corresponding number of subcarriers, the subcarrier spacings within each frequency domain resource block group are equal, and the subcarrier spacings between various frequency domain resource block groups are equal;
a processing module 64, configured to execute the following operations for each group of frequency domain resource block groups, to obtain a plurality of data sequences respectively corresponding to each frequency domain resource block groups: respectively performing a first inverse Fourier transform on target data transmitted in the various frequency domain resource blocks included in the frequency domain resource block group, to obtain a plurality of groups of first data sequences, the data to be transmitted comprising the target data; performing a second inverse Fourier transform or upsampling on the plurality of groups of first data sequences to obtain a data sequence corresponding to the frequency domain resource block group; and
a transmission module 66, configured to transmit the plurality of groups of data sequences.

In one exemplary embodiment, the apparatus further comprises an operation module for performing a filtering operation on each group of data sequences before transmitting a plurality of groups of data sequences, wherein at least one group of data sequences has a different filtering function when performing the filtering operation than other groups.

In one exemplary embodiment, the plurality of frequency domain resource block groups include at least one target frequency domain resource block group, the bandwidth of the target resource blocks included in the target frequency domain resource block group is not equal to the bandwidth of other resource blocks included in the target frequency domain resource block group other than the target resource blocks, and the target resource blocks are resource blocks adjacent to frequency domain resource blocks included in frequency domain resource block groups other than the target frequency domain resource block group.

In one exemplary embodiment, among the plurality of frequency domain resource blocks, the bandwidth of the frequency domain resource blocks within each group is equal to the bandwidth of the frequency domain resource blocks in another group that are not adjacent.

In one exemplary embodiment, among the plurality of frequency domain resource block groups, the frequency domain resource blocks which are not adjacent to any other group have the same bandwidth.

In one exemplary embodiment, the bandwidths of the target resource blocks are less than bandwidths of other resource blocks.

In one exemplary embodiment, subcarriers corresponding to the target number of frequency domain resource blocks are continuously distributed in a frequency domain.

In one exemplary embodiment, the frequency domain resource blocks in each group are continuously distributed in a frequency domain, and a plurality of frequency domain resource block groups are continuously distributed in the frequency domain.

In one exemplary embodiment, the IFFT points of the first inverse Fourier transform are greater than or equal to the number of subcarriers corresponding to the frequency resource blocks currently processed, and/or the IFFT points of the first inverse Fourier transform are smaller than the sum of the number of subcarriers corresponding to the target number of frequency resource blocks.

In one exemplary embodiment, there is at least one frequency domain resource block group in which the bandwidths of all frequency domain resource blocks within the group are not equal and the number of IFFT points of the first inverse Fourier transform is equal.

In one exemplary embodiment, a zero frequency position of the first inverse Fourier transform is within a range of frequency domain resource blocks in which the first inverse Fourier transform is currently performed.

In one exemplary embodiment, when the first inverse Fourier transform is performed on different frequency domain resource blocks, the corresponding zero frequency positions are different.

In one exemplary embodiment, for at least one group of frequency-domain resource block groups, the zero frequency position or zero subcarrier during the first inverse Fourier transform operation is located at one of the subcarriers within the frequency domain resource blocks.

In one exemplary embodiment, the processing module 64 is configured to perform a respective first inverse Fourier transform on the target data transmitted in each frequency resource block included in the frequency resource block group by: performing a Fourier transform on the target data transmitted in at least one frequency resource block included in the frequency resource block group; and performing the first inverse Fourier transform on the target data on which the Fourier transform has been performed.

In one exemplary embodiment, the processing module 64 is configured to perform a second inverse Fourier transform on the plurality of groups of first data sequences by: performing a second inverse Fourier transform on the plurality of groups of first data sequences in a manner of performing the second inverse Fourier transform once every N pieces of first data, wherein the first data for each execution of the second inverse Fourier transform comes from each group of first data sequences, and there are N groups of first data sequences.

In one exemplary embodiment, the processing module 64 is configured to perform the second inverse Fourier transform once every N pieces of first data by: adding a predetermined number of 0s for every N pieces of first data, and performing the second inverse Fourier transform on the first data to which the predetermined number of 0s has been added.

In one exemplary embodiment, the processing module 64 is configured to perform upsampling by: performing upsampling on a first data sequence corresponding to the frequency domain resource block group when a frequency domain resource block group only includes one frequency domain resource block, wherein the upsampling comprises inserting a plurality of 0s into the first data sequence at equal intervals to obtain a data sequence corresponding to the frequency domain resource block group.

In one exemplary embodiment, the transmission module 66 is configured to transmit a plurality of groups of data sequences by: performing an addition operation on the plurality of groups of data sequences to obtain a group of time domain data sequences; and transmitting the group of time domain data sequences.

In one exemplary embodiment, the apparatus further comprises: a dot product module, configured to perform, before performing an addition operation on the plurality of groups of data sequences, a dot product operation on at least one group of data sequences included in the plurality of groups of data sequences, wherein the sequences multiplied in the dot product operation are sequences of equal magnitude with successive phase changes.

In one exemplary embodiment, the apparatus further comprises: a windowing and filtering module, configured to perform a windowing operation or a filtering operation on each group of data sequences included in the plurality of groups of data sequences before performing the addition operation on the plurality of groups of data sequences.

It should be noted that the modules above may be implemented by software or hardware, and the latter may be implemented in the following manner, but is not limited thereto: the modules are located in the same processor; or the modules are located in different processors in an arbitrary combination.

The embodiments of the present disclosure further provide a computer readable storage medium storing a computer program, wherein the computer program is configured to execute, when running, the steps in any one of the described method embodiments.

In one exemplary embodiment, the computer readable storage medium may include, but is not limited to, any medium that can store a computer program, such as a USB flash drive, a Read-Only Memory, ROM, a Random Access Memory, RAM, a removable hard disk, a magnetic disk, or an optical disc.

The embodiments of the present disclosure further provide an electronic apparatus, including a memory and a processor; the memory stores a computer program, and the processor is configured to run the computer program, so as to execute the operations in any one of the method embodiments.

In one exemplary embodiment, the electronic device can further comprise a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present disclosure is not limited to any specific hardware and software combinations.

The content above only relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A method for transmitting data sequence, comprising:
grouping a target number of frequency domain resource blocks to obtain a plurality of frequency domain resource block groups, wherein data to be transmitted is transmitted in the target number of frequency domain resource blocks, each frequency domain resource block comprises a corresponding number of subcarriers, subcarrier spacings within each frequency domain resource block group are equal, and subcarrier spacings between various frequency domain resource block groups are equal;
executing following operations for each frequency domain resource block group, to obtain a plurality of groups of data sequences respectively corresponding to respective frequency domain resource block groups: respectively performing a first inverse Fourier transform on target data transmitted in respective frequency domain resource blocks included in the frequency domain resource block group, to obtain a plurality of groups of first data sequences, the data to be transmitted comprising the target data; and performing a second inverse Fourier transform or upsampling on the plurality of groups of first data sequences to obtain a data sequence corresponding to the frequency domain resource block group; and
transmitting the plurality of groups of data sequences.

2. The method according to claim 1, wherein before transmitting the plurality of groups of data sequences, the method further comprises:
performing a filtering operation on each group of data sequences, wherein at least one group of data sequences has a different filtering function when performing the filtering operation than other groups.

3. The method according to claim 1, wherein the plurality of frequency domain resource block groups include at least one target frequency domain resource block group, bandwidth of target resource block included in the target frequency domain resource block group is not equal to bandwidth of other resource blocks included in the target frequency domain resource block group other than the target resource block, and the target resource block is a resource block adjacent to a frequency domain resource block included in other frequency domain resource block groups other than the target frequency domain resource block group.

4. The method according to claim 1, wherein among the plurality of frequency domain resource block groups, bandwidth of the frequency domain resource block groups within each group is equal to bandwidth of frequency domain resource blocks in another group that are not adjacent.

5. The method according to claim 1, wherein among the plurality of frequency domain resource block groups, the frequency domain resource blocks which are not adjacent to any other group have same bandwidth.

6. The method according to claim 3, wherein the bandwidth of the target resource block is less than bandwidths of other resource blocks.

7. The method according to claim 1, wherein subcarriers corresponding to the target number of frequency domain resource blocks are continuously distributed in a frequency domain.

8. The method according to claim 1, wherein the frequency domain resource blocks in each group are continuously distributed in a frequency domain, and the plurality of frequency domain resource block groups are continuously distributed in the frequency domain.

9. The method according to claim 1, wherein number of Inverse Fast Fourier transform (IFFT) points of the first inverse Fourier transform is greater than or equal to number of subcarriers corresponding to frequency domain resource blocks currently processed, and/or the number of IFFT points of the first inverse Fourier transform is smaller than sum of the number of subcarriers corresponding to the target number of the frequency domain resource blocks.

10. The method according to claim 1, wherein there is at least one frequency domain resource block group in which bandwidths of all frequency domain resource blocks within the group are not entirely equal and numbers of Inverse Fast Fourier transform (IFFT) points of the first inverse Fourier transform of all frequency domain resource blocks within the group are equal.

11. The method according to claim 1, wherein a zero frequency position of the first inverse Fourier transform is within a range of frequency domain resource blocks in which the first inverse Fourier transform is currently performed.

12. The method according to claim 1, wherein when the first inverse Fourier transform is performed on different frequency domain resource blocks, corresponding zero frequency positions are different.

13. The method according to claim 1, wherein For at least one group of frequency domain resource block groups, zero frequency position or zero subcarrier during first inverse Fourier transform operation is located at one of the subcarriers within the frequency domain resource blocks.

14. The method according to claim 1, wherein respectively performing a first inverse Fourier transform on target data transmitted in respective frequency domain resource blocks included in the frequency domain resource block group comprises:
performing a Fourier transform on target data transmitted in at least one frequency domain resource block included in the frequency domain resource block group; and
performing the first inverse Fourier transform on the target data on which the Fourier transform has been performed.

15. The method according to claim 1, wherein performing a second inverse Fourier transform on the plurality of groups of first data sequences comprises:
performing the second inverse Fourier transform on the plurality of groups of first data sequences in a manner of performing the second inverse Fourier transform once for every N pieces of first data, wherein the first data for each execution of the second inverse Fourier transform comes from each group of first data sequences, and number of groups of first data sequences is N.

16. The method according to claim 1, wherein performing the second inverse Fourier transform once for every N pieces of first data comprises:
adding a predetermined number of 0s for every N pieces of first data, and performing the second inverse Fourier transform on the first data to which the predetermined number of 0s has been added.

17. The method according to claim 1, wherein the method further comprises:
performing upsampling on a first data sequence corresponding to the frequency domain resource block group when a frequency domain resource block group only includes one frequency domain resource block, wherein the upsampling comprises inserting a plurality of 0s into the first data sequence at equal intervals to obtain a data sequence corresponding to the frequency domain resource block group.

18. The method according to claim 1, wherein transmitting the plurality of groups of data sequences comprises:
performing an addition operation on the plurality of groups of data sequences to obtain a group of time domain data sequences; and
transmitting the group of time domain data sequences.

19. The method according to claim 18, wherein before performing the addition operation on the plurality of groups of data sequences, the method further comprises:
performing a dot product operation on at least one group of the data sequences included in the plurality of groups of the data sequences, wherein the sequences multiplied in the dot product operation are sequences with equal magnitude and successive phase changes.

20. The method according to claim 18 or 19, wherein before performing an addition operation on the plurality of groups of data sequences, the method further comprises:
performing a windowing operation or a filtering operation on each group of data sequences included in the plurality of groups of data sequences.

21. An apparatus for transmitting data sequence, comprising:
grouping module, configured to group a target number of frequency domain resource blocks to obtain a plurality of frequency domain resource block groups, wherein data to be transmitted is transmitted in the target number of frequency domain resource blocks, each frequency domain resource block comprises a corresponding number of subcarriers, subcarrier spacings within each frequency domain resource block group are equal, and subcarrier spacings between various frequency domain resource block groups are equal;
processing module, configured to execute following operations for each frequency domain resource block group, to obtain a plurality of groups of data sequences respectively corresponding to respective frequency domain resource block groups: respectively performing a first inverse Fourier transform on target data transmitted in respective frequency domain resource blocks included in the frequency domain resource block group, to obtain a plurality of groups of first data sequences, the data to be transmitted comprising the target data;
performing a second inverse Fourier transform or upsampling on the plurality of groups of first data sequences to obtain a data sequence corresponding to the frequency domain resource block group; and
transmission module, configured to transmit the plurality of groups of data sequences.

22. A computer readable storage medium, storing a computer program, wherein the computer program implements the steps of the method according to any one of claims 1 to 20 when being executed by a processor.

23. An electronic device, comprising a memory, a processor, and a computer program stored in the memory and run on the processor, wherein when the processor executes the computer program, the steps of the method according to any one of claims 1 to 20 are implemented.
